# EUROPEAN PATENT APPLICATION

(11) **EP 4 357 957 A1**
(43) Date of publication of application: **24.04.2024**
(21) Application number: 22306579.8
(22) Date of filing: 18.10.2022
(51) Int. Cl.: G06F 21/74, G06F 21/52, G06F 9/30

(54) **METHOD FOR SECURING AGAINST PHYSICAL OR LOGICAL ATTACKS AN EXECUTION OF A MACHINE LANGUAGE INSTRUCTIONS CODE**

(71) Applicant: THALES DIS FRANCE SAS, 92190 Meudon (FR)
(72) Inventor: TEGLIA, Yannick, 92190 Meudon (FR); SINTZOFF, André, 92190 Meudon (FR); COULON, Jean Roch, 92190 Meudon (FR)
(74) Representative: Bricks, Amélie

(57) **Abstract**

The present invention relates to a method for securing against physical or logical attacks an execution of a machine language instructions code comprising a plurality of operation codes, said operation codes being defined by a determined instruction set architecture ISA defining for each operation code one or more elementary operations to be performed when executing an instruction corresponding to said operation code,
said method being performed by an electronic system comprising a processor configured for executing instructions in both a non-secure mode of execution and at least one secure mode of execution securing an execution of said instructions against attacks, wherein :
- executing an instruction in said non-secure mode comprises executing, by the processor, only said elementary operations defined in the determined instruction set architecture for the operation code corresponding to this instruction,
- executing an instruction in one of said secure modes comprises triggering, by the processor, an execution of a different set of elementary operations than said elementary operations defined in the determined instruction set architecture for the operation code corresponding to this instruction,
and said method comprising, performed by the processor:
detecting (S1) in said code successive operation codes forming a determined sequence of operation codes called a gadget,
executing (S2) one or more instructions comprised in said code in a secure mode of execution based on said detected gadget.

## Description

### FIELD OF THE INVENTION

The present invention relates to the field of securing software execution on an electronic device against attacks, and more particularly to a method for a dynamic activation of countermeasures.

### BACKGROUND OF THE INVENTION

Software execution on an electronic device may be subject to various attacks that enable an attacker to modify maliciously the software code execution on the electronic device, or to gain knowledge of sensitive data such as cryptographic keys. As an example, fault injection attacks use electromagnetic signals or a laser beam to change binary values stored in a register or processed by a processor. Such attacks may for example be used to change the Program Counter (PC) register, or the Stack Pointer (SP) register, which enables an attacker to modify the next instructions to be executed and to have the processor execute malicious code. Similarly, the perturbation induced by an electromagnetic signal or a laser beam may be used to induce a malfunction of the processor, such as a buffer overflow, which an attacker can also leverage to execute a malicious code. As another example, side channel attacks enable an attacker to guess the value of data processed by the processor, such as an encryption key, by analyzing the electromagnetic emissions or power consumption of the electronic device. Other attacks called logical attacks do not rely on any physical effect of the device, active or passive, but rather try to exploit a logical flaw of the software, as for instance by overrunning a buffer or smashing a stack.

Such kinds of attacks have been made easier to elaborate by the fact that Instruction Set Architectures (ISA) of most processors currently used in computer systems are public. It enables an attacker to know precisely how instructions are executed and to benefit from this knowledge to craft efficient attacks.

Open source processors, such as RISC-V processors, are even more sensitive to such attacks. Indeed, being open-source, not only their Instruction Set Architecture (ISA) but also their hardware architecture are public, which makes it even easier for attackers to identify their weaknesses and to elaborate efficient attacks.

The ISA of a processor can be modified into a secure version in order to make its execution of instructions less sensitive to attacks but it has the drawback of breaking the compatibility of this secure processor with programs compiled for its non-secure version.

Consequently, there is a need for a secure processor, and a corresponding execution method, enabling a better protection, against attacks, of the execution of instructions than an existing non-secure processor with a given ISA, such that the secure processor and the non-secure processor share the same ISA.

### SUMMARY OF THE INVENTION

For this purpose and according to a first aspect, this invention therefore relates to a method for securing against physical or logical attacks an execution of a machine language instructions code comprising a plurality of operation codes,
said operation codes being defined by a determined instruction set architecture ISA defining for each operation code one or more elementary operations to be performed when executing an instruction corresponding to said operation code,
said method being performed by an electronic system comprising a processor configured for executing instructions in both a non-secure mode of execution and at least one secure mode of execution securing an execution of said instructions against attacks, wherein :
   - executing an instruction in said non-secure mode comprises executing, by the processor, only said elementary operations defined in the determined instruction set architecture for the operation code corresponding to this instruction,
   - executing an instruction in one of said secure modes comprises triggering, by the processor, an execution of a different set of elementary operations than said elementary operations defined in the determined instruction set architecture for the operation code corresponding to this instruction,
   and said method comprising, performed by the processor:
   - detecting in said code successive operation codes forming a determined sequence of operation codes called a gadget,
   - executing one or more instructions comprised in said code in a secure mode of execution based on said detected gadget.

It enables to protect only portions of the code to be executed, without modifying the code. It neither requires the insertion in the code of flags for activating protections, nor the insertion in the code of specific instructions defined by new opcodes, which would render to code incompatible with existing processors.

Said instructions executed in said secure mode may be instructions corresponding to the detected operation codes forming said gadget.

Said instructions executed in said secure mode may be instructions following in said code the instructions corresponding to the detected operation codes forming said gadget.

In an embodiment, said gadget comprises a combination of operation codes among NOP and Hint in the RISC-V instruction set architecture.

By doing so, a specific behavior may be voluntarily triggered by the owner of the code at specific points of the code, while still keeping the code executable by a processor which would not implement the invention and would not recognize the gadget.

In an embodiment, said gadget comprises a combination of operation codes characteristic of an attack.

By doing so, the processor is able to trigger by itself a secure mode of execution when the code has been modified by an attacker to include an attack.

In an embodiment, said gadget comprises a combination of operation codes characteristic of a sensitive operation.

By doing so, the processor is able to trigger by itself a secure mode of execution when it detects a sensitive operations that requires a higher level of protection than other operations of the code.

In an embodiment, said execution of a different set of elementary operations triggered by the processor is performed by the processor.

In another embodiment, said execution of a different set of elementary operations triggered by the processor comprises an execution of at least on of said elementary operations by an electronic circuit of the electronic system located outside said processor.

Therefore, when executing an instruction, the processor may perform itself all the elementary operations to be performed for executing the instruction, or it may offload the execution of part or all these elementary operations to another hardware element of the electronic device, such as a coprocessor.

Executing instructions in said secure mode of execution may comprise comparing operation codes corresponding to said instructions with a white list or a black list of operation codes.

By doing so, while in a secure mode of execution, instructions may be processed differently, depending on their presence on the white list or black list.

Executing instructions in said secure mode of execution may comprise executing said instructions based on a specific value stored in a memory, a Control Status Register or an internal register of said processor.

Making the processing in secure mode dependent on a value stored in memory or in the processor enables to program different behaviors of the processor in secure mode, depending no only on the gadget itself but also on another value which can be set by the execution of previous instructions of the code.

Such a value stored in a memory, a Control Status Register or an internal register of said processor may be a counter and said counter may be updated after each execution of an instruction in said secure mode of execution.

By doing so, the processor may execute, after detecting the gadget, a predetermined number of instruction in secure mode, and then get back to its regular, unsecure, mode of execution for the next instructions.

Executing instructions comprised in said code in said secure mode of execution may comprise triggering an exception, failing silently or entering in an error mode.

In such a case, the processor may deny the execution of a specific instruction when it has been switched to a secure mode of execution by the detection of the gadget.

Executing instructions comprised in said code in said secure mode of execution may comprise triggering a determined hardware configuration of said processor for enhancing security.

By doing so, the detection of the gadget may activate sensors or countermeasures while the processor executes instructions in the secure mode of execution.

In an embodiment, said sensitive operation is a cryptographic operation, said instructions executed in said secure mode of execution are instructions executing said cryptographic operation and executing said instructions comprises executing a secure implementation of said instructions.

By doing so, when the processor detects through the gadget a sensitive cryptographic operation, the security level of execution of this operation is automatically increased in order to protect the sensitive data, including a secret key, manipulated by the cryptographic operation.

Executing instructions comprised in said code in said secure mode of execution may comprise executing at least one replacement instruction instead of an instruction comprised in said code.

Such a replacement instruction may comprise another operation code than the operation code of the instruction it replaces.

Said replacement instruction may have at least one different operand than the operands of the instruction it replaces.

Performing such an instruction replacement enables to have the execution of a given code yielding to the execution of different instructions and therefore to different results, when the processor executing it implements the invention or not. It can be used for various purposes such as temporarily increasing the security level of execution or as a kind of obfuscation of the code to be executed.

According to a second aspect, this invention relates to a computer program product directly loadable into the memory of at least one computer, comprising software code instructions for performing the steps of the method according to the first aspect of the invention when said product is run on the computer.

According to a third aspect, this invention relates to an electronic system comprising a processor and a memory configured for performing the steps of the methods according to the first aspect of the invention.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 is a schematic illustration of an electronic system according to the present invention;
- Figure 2 is a schematic illustration of a method according to an embodiment of the present invention;
- Figure 3 is an example of instructions of an encryption round according to AES.

### DETAILED DESCRIPTION OF EMBODIMENTS OF THE INVENTION

According to a first aspect, the invention relates to a method for securing against physical or logical attacks an execution of a code composed of machine language instructions. As usual in such a computer code, each instruction comprises an operation code, all operations codes being defined by a determined instruction set architecture ISA. The ISA defines for each operation code, also called opcode, one or more elementary operations to be performed when executing an instruction corresponding to said operation code. As an example, such elementary operations may be loading data from a memory address, performing a calculation using an Arithmetic and Logical Unit (ALU), storing data into the memory or a CPU register etc...

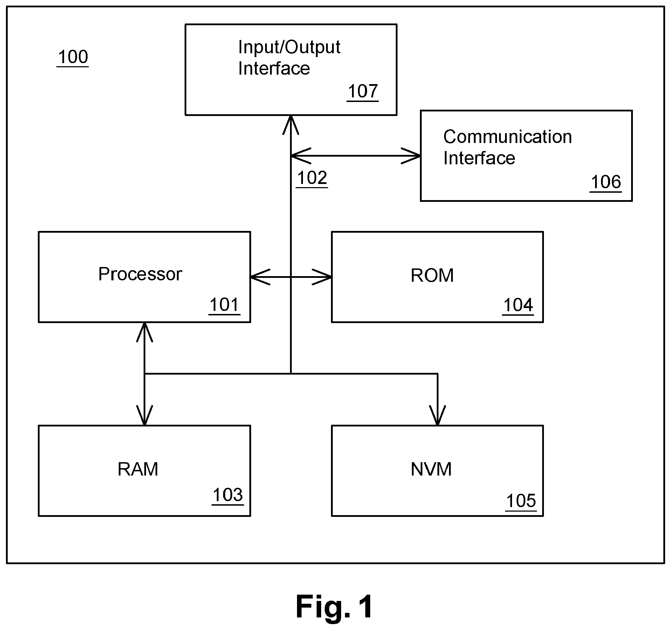

The secure execution of instructions of the code according to the invention is performed by an electronic system 100 comprising, as depicted on **Figure 1****,** a processor 101 for the execution of the code to be protected, connected via a bus 102 to a random access memory (RAM) 103, a read-only memory (ROM) 104, and/or a non-volatile memory (NVM) 105. The electronic system may include additional circuits in charge of performing security actions or secure calculations, such as one or more coprocessor, a reset circuit, circuits implementing countermeasures etc... The electronic system 100 may further include a communication interface 106 connected to the bus and which may be used to connect the device to various forms of wireless networks, e.g., wide-area networks, WiFi networks, or mobile telephony networks, or to wired networks such as an Ethernet network. It may also include an input-output interface 107 providing interfaces to an administrator, such as one or more screens, loudspeakers, a mouse, tactile surfaces, a keyboard etc...

Such an electronic system may for example be a smartcard, a computer, a smartphone or a server.

Such attacks may for example be fault injection attacks, side channel attacks or logical attacks.

In order to make the processor able to secure the execution of instructions without requiring either specific security-related instructions to be inserted in the code, for activating countermeasures for example, or calling specific opcodes triggering a secure execution, which would require to change the ISA of the processor compared to its existing ISA, a first idea of the invention is to make the processor able to execute instructions in two different ways based on the same ISA :
• in a non-secure mode of execution, the processor executes each instruction according to the ISA, by performing for each instruction the elementary operations defined in the ISA for the operation code corresponding to this instruction;
• in at least one secure mode of execution, securing the execution of instructions against attacks, the processor, when executing an instruction, triggers the execution of a different set of operations than these elementary operations defined in the ISA for the operation code corresponding to this instruction.

As exemplified here below, such a different set of operations is defined as not identical to the set of elementary operations defined in the ISA for an opcode. It may be completely different, with no operation in common between the two sets of operations, or only partially different, some operations being part of the two sets. The set of operations performed in secure mode for an opcode may also comprise both the set of all operations defined in the ISA for this opcode and additional operations.

Doing so enables the processor to remain fully compatible with any program compiled for its ISA, while enabling a secure execution of instructions.

In order to keep the execution time of a full program or a long code sequence acceptable, such a secure mode of execution shall not be applied to all instructions but rather only to specific instructions more sensitive to attacks. Therefore, a second main idea of the invention is to trigger the activation of a secure mode of execution only when a specific sequence of opcodes executed or to be executed by the processor is detected. As detailed here below, such a sequence of opcodes may for example be a signature of an attack, or on the contrary of a legitimate but sensitive operation requiring a higher level of protection. It may also be a sequence of opcodes voluntarily added by a developer in the code to be executed, in order to trigger on demand a secure mode of execution.

By doing so, a secure mode of execution may be triggered only when needed, which limits the impact on the execution time of the code executed by the processor.

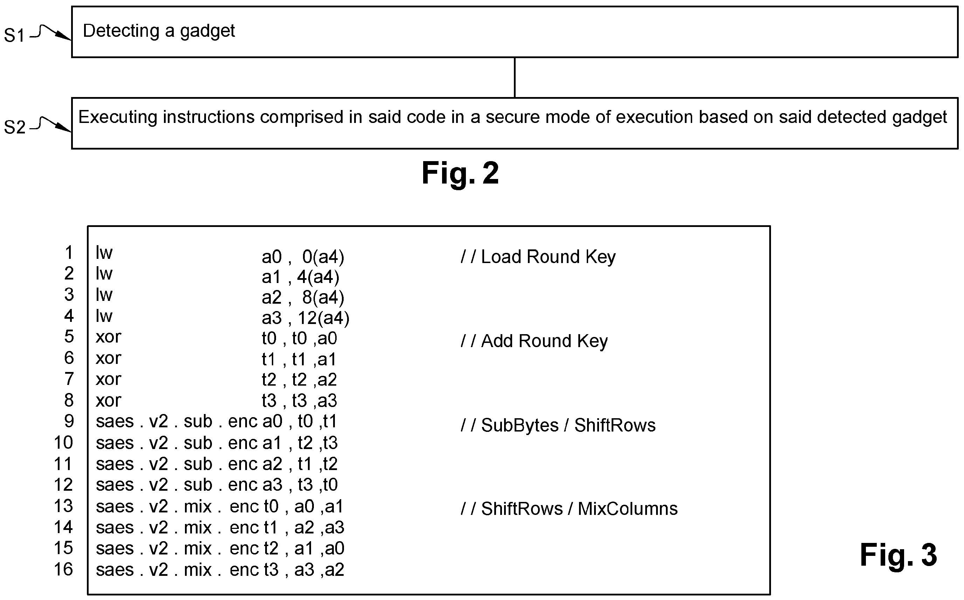

The following paragraphs describe in detail the steps, shown on **Figure 2****,** of the method for a secure execution of a code according to the invention.

In a first step S1, the processor of the electronic system detects in the code successive operation codes forming a determined sequence of operation codes. In the following paragraphs, such a sequence of opcodes to be detected is called a gadget.

The processor may monitor sequences of up to n successive opcodes in the code with n an integer, for example equal to 4 or 5. The processor may after decoding an opcode, compare the sequences formed by this opcode and the previously decoded opcodes with a list of opcode sequences for which a secure mode of execution should be triggered, in order to determine if any sequence of opcodes from the code matches any of the sequences in the list.

In order to do so, the processor may for example, when n=4 :
- decode a first opcode O1,
- decode the next opcode 02 and compare (01,02) to a list of opcode sequences for which a secure mode of execution should be triggered,
- decode the next opcode O3 and compare (01,02,03) and (O2,O3) to a list of opcode sequences for which a secure mode of execution should be triggered,
- decode the next opcode 04 and compare (01,02,03,04) and (O2,O3,O4) and (O3,O4) to a list of opcode sequences for which a secure mode of execution should be triggered,
- decode the next opcode O5 and compare (O2,O3,O4,O5) and (O3,O4,O5) and (O4,O5) to a list of opcode sequences for which a secure mode of execution should be triggered...

Sequences of opcodes looked for in the code comprise at least two successive opcodes.

Optionally, the processor, at the first step, may extend the comparison versus a list to the operands of the instructions of the code. The processor may for example compute a signature based on the opcodes and operands of several successive instructions and compare it to a list of signatures which should trigger a secure mode of execution.

In an embodiment, such a gadget looked for in the code may comprise a combination of opcodes which are characteristic of an attack, such as a fault injection attack. Therefore, by detecting in the code such combinations of opcodes, it is possible to detect an attack at its beginning, and to activate an appropriate secure mode of execution in order to protect the electronic system against such an attack. As an example, repeated writing in adjacent memory cells may be considered as a signature of the RowHammer attack (« Flipping Bits in Memory Without Accessing Them: An Experimental Study of DRAM Disturbance Errors », ACM SIGARCH Computer Architecture News - ISCA '14, vol. 42, no 3, juin 2014, p. 361-372); similarly, writing energy management register with specific or forbidden values may be considered as a signature of the ClockScrew attack (CLKSCREW: Exposing the Perils of Security-Oblivious Energy Management, Adrian Tang, Simha Sethumadhavan, and Salvatore Stolfo, Columbia University).

In another embodiment, the gadget may comprise a combination of operation codes characteristic of a sensitive operation, such as a cryptographic operation. As an example, instructions of an encryption round according to AES cryptographic scheme are shown on **Figure 3****.** Such an encryption round begins with four LOAD instructions for loading the round key, followed by four XOR instructions for performing the Add Roundkey operation of AES. In this example, the processor may detect at the first step an opcode sequence comprising these four LOAD opcodes and these four XOR opcodes, and positively match this sequence to the start of an AES encryption round which is a sensitive operation requiring additional protection.

In another embodiment, the sequence of opcodes to be detected in the code is neither a signature of a threat nor a signature of a particular operation but it is rather a sequence of opcodes to be added on purpose in the code in order to trigger a secure mode of execution at this step of the execution of the code. In order to keep the code fully executable on another "preexisting" processor with the same ISA but not implementing the method according to the invention, these opcodes shall be defined in the ISA but they shall have no effect on the execution of the code by such a "preexisting" processor. As an example, such opcodes may for example be NOP or HINT opcodes which usually exist in modern processors' ISA but are effect-less.

Upon a positive detection of a gadget in the first step S1, the processor shall execute the next instructions of the code in a secure mode of execution. Therefore, in a second step S2, the processor executes one or more instructions comprised in the code in such a secure mode of execution based on the detected gadget.

When multiple secure modes of execution are available to the processor, it may select the secure mode of execution to be applied depending on the detected gadget.

In one embodiment, the instructions executed in secure mode by the processor are the instruction corresponding to the detected opcodes which form the detected gadget. In order to achieve this result, the processor should, at the first step, decode multiple instructions and wait before starting executing the first one the end of the detection of a gadget among the sequence of the detected opcodes, in order to know whether the decoded instructions can be executed in a non-secure mode or they shall be executed in a secure mode of execution.

In another embodiment, the instructions executed in secure mode by the processor are instructions following in the code the instructions corresponding to the detected opcodes which form the detected gadget. In such a case, instructions are executed one by one in a non-secure mode until a gadget is detected in the last executed instructions, which activates a secure mode of execution for one or more next operations to be executed.

Various secure modes of execution may be implemented in the processor. The elementary operations whose execution is triggered by the processor in a secure mode of execution may be simply executed by the same processor. Alternatively, some or all of these elementary operations may be executed by another part of the electronic device. In such a case, the execution of a different set of elementary operations triggered by the processor comprises an execution of at least one of said elementary operations by an electronic circuit of the electronic system located outside said processor, such as a coprocessor, a reset circuit or circuits implementing hardware countermeasures. In an embodiment, the electronic device comprises two processing means : a first processing mean dedicated to the gadget detection at the first step and the triggering of the execution of a different set of elementary operations at the second step, and the main CPU of the electronic device performing the execution of these elementary operations triggered by the first processing means.

Several embodiments are proposed in the following paragraphs.

In an embodiment, executing instructions in a secure mode of execution comprises comparing operation codes corresponding to these instructions with a white list or a black list of operation codes. By doing so, when instructions are executed in such a secure mode of execution, only instructions whose opcodes are part of the whitelist can be executed or execution of instructions whose opcodes are part of the blacklist is denied. As an example, when the processor fetches an opcode belonging to the blacklist, executing this instruction in the secure mode of execution may comprise triggering an exception, failing silently, without any error message, or entering in an error mode. The processor may for example send a signal to a dedicated electronic circuit acting as a killswitch and making the electronic device crash or reboot.

Executing instructions in a secure mode of execution may also comprise executing these instructions based on a specific value stored in a memory, in a Control or Status Register or an internal register of the processor. Execution may for example be prevented or authorized only when such a specific value, such as a control bit set to one, is stored at a predetermined location. Such a specific value may be hardcoded in memory. Alternatively, it may be set at runtime by previous instructions of the code. It may also be provided by an entity that is external to the processor.

These two examples of secure mode of execution may be combined. In the secure mode of execution resulting from the combination of using white/black lists and of executing depending on a specific value, instructions which correspond to an opcode of the white list may be executed normally but instructions which correspond to an opcode of the white list may be executed only when a specific value authorizing their execution is stored at a predetermined location in memory. Alternatively, instructions which correspond to an opcode of the black list are not executed unless a specific value authorizing their execution is stored at a predetermined location in memory

Executing instructions in a secure mode of execution may also comprise executing only the instructions that have been loaded from a specific memory area. For example, a direct writing in the stack pointer may be considered as a dangerous operation and it may be authorized only when the code comprising this instruction is stored in a specific trusted memory area storing trusted code, such as a ROM memory.

In an embodiment, the specific value stored in memory is not just a static value, such as a flag, but rather an evolving value such as a counter. This counter may be updated after each execution of an instruction in said secure mode of execution. When this counter reaches zero, the execution mode may be switched back to the normal, unsecure, mode of execution for the next instruction to be executed. By doing so, the secure mode of execution depending on the counter value may be triggered only for a limited number of executions of instructions.

In an embodiment, executing instructions in a secure mode of execution comprises triggering a determined hardware configuration of said processor for enhancing security. In this embodiment, switching to a secure mode of execution may for example activate sensors or countermeasures against attacks. It may also trigger security-related actions, such as checking the content of a predetermined memory area or flushing caches.

When the gadget comprises a combination of operation codes characteristic of a sensitive operation, and this sensitive operation is a cryptographic operation, the instructions executed in a secure mode of execution comprise the instructions executing the cryptographic operation and these instructions may be executed by executing a secure implementation of these instructions.

As an example, when the processor detects at the first step an opcode sequence comprising the four LOAD opcodes and fourXOR opcodes starting an AES encryption round, these instructions and/or subsequent instructions for SubBytes, ShiftRows and MixColumns operations may be executed by a secure coprocessor which implements a secure version of these instructions comprising additional checks and countermeasures. For example, such a secure coprocessor may split an operation to be applied to a 32 bit word into several operations applied to 8 bit words, and the order in which the bits of the 32 bits word are treated maybe randomly chosen. It may apply a mask to the data processed by the instructions. It may also perform a double calculation and compare results at the end.

In an embodiment, executing instructions in a secure mode of execution comprises executing at least one replacement instruction instead of an instruction comprised in said code. In such a secure mode of execution, the processor may use a correspondence table replacing some instructions by another one. A replacement instruction may comprise another code than the opcode of the instruction it replaces. For example, a multiplication instruction may be replaced by a division instruction when executed in such a secure mode of execution. The replacement instruction may also have at least one different operand than the operands of the instruction it replaces. For example, a load instruction may be modified in order to change the address of the data to be loaded or the destination of the load operation.

According to a second aspect, the invention relates to a computer program product directly loadable into the memory of at least one computer, comprising software code instructions for performing, when said product is run on the computer, the steps of the methods described here before.

According to a third aspect, the invention is also related to an electronic system 100 comprising a processor 101 and a memory described here before and configured for performing the steps of the method described above.

In addition to these features, the computer program and the electronic system according to the second and third aspects of the invention may be configured for performing or may comprise any other features described here before.

The method presented here therefore enables to efficiently trigger the execution of specific instructions in a secure mode of execution without any impact on the code to be executed itself. It is also keeps the protected code perfectly compatible with existing processors since it does not require the definition of any new instructions in the ISA.

## Claims

1. A method for securing against physical or logical attacks an execution of a machine language instructions code comprising a plurality of operation codes,
said operation codes being defined by a determined instruction set architecture defining for each operation code one or more elementary operations to be performed when executing an instruction corresponding to said operation code,
said method being performed by an electronic system (100) comprising a processor (101) configured for executing instructions in both a non-secure mode of execution and at least one secure mode of execution securing an execution of said instructions against attacks, wherein :
- executing an instruction in said non-secure mode comprises executing, by the processor, only said elementary operations defined in the determined instruction set architecture for the operation code corresponding to this instruction,
- executing an instruction in one of said secure modes comprises triggering, by the processor, an execution of a different set of elementary operations than said elementary operations defined in the determined instruction set architecture for the operation code corresponding to this instruction,
and said method comprising, performed by the processor:
- detecting (S1) in said code successive operation codes forming a determined sequence of operation codes called a gadget,
- executing (S2) one or more instructions comprised in said code in a secure mode of execution based on said detected gadget.

2. The method of claim 1, wherein said instructions executed in said secure mode are instructions corresponding to the detected operation codes forming said gadget.

3. The method of claim 1, wherein said instructions executed in said secure mode are instructions following in said code the instructions corresponding to the detected operation codes forming said gadget.

4. The method of any one of claims 1 to 3, wherein said gadget comprises a combination of operation codes among NOP and Hint in the RISC-V instruction set architecture.

5. The method of any one of claims 1 to 3, wherein said gadget comprises a combination of operation codes characteristic of an attack.

6. The method of any of claims 1 to 3, wherein said gadget comprises a combination of operation codes characteristic of a sensitive operation.

7. The method of any one of claims 1 to 6, wherein said execution of a different set of elementary operations triggered by the processor is performed by the processor.

8. The method of any one of claims 1 to 6, wherein said execution of a different set of elementary operations triggered by the processor comprises an execution of at least one of said elementary operations by an electronic circuit of the electronic system located outside said processor.

9. The method of any one of claims 1 to 8, wherein executing instructions in said secure mode of execution comprises comparing operation codes corresponding to said instructions with a white list or a black list of operation codes.

10. The method of any one of claims 1 to 9, wherein executing instructions in said secure mode of execution comprises executing said instructions based on a specific value stored in a memory, a Control Status Register or an internal register of said processor.

11. The method of the previous claim, wherein said value stored in a memory, a Control Status Register or an internal register of said processor is a counter and said counter is updated after each execution of an instruction in said secure mode of execution.

12. The method of any one of claims 1 to 11, wherein executing instructions comprised in said code in said secure mode of execution comprises triggering an exception, failing silently or entering in an error mode.

13. The method of any one of claims 1 to 12, wherein executing instructions comprised in said code in said secure mode of execution comprises triggering a determined hardware configuration of said processor for enhancing security.

14. The method of claim 6, wherein said sensitive operation is a cryptographic operation, said instructions executed in said secure mode of execution are instructions executing said cryptographic operation and executing said instructions comprises executing a secure implementation of said instructions.

15. The method of any one of claims 1 to 14, wherein executing instructions comprised in said code in said secure mode of execution comprises executing at least one replacement instruction instead of an instruction comprised in said code.

16. The method of the previous claim, wherein said replacement instruction comprises another operation code than the operation code of the instruction it replaces.

17. The method of claim 15 or 16, wherein said replacement instruction has at least one different operand than the operands of the instruction it replaces.

18. A computer program product directly loadable into the memory of at least one computer, comprising software code instructions for performing the steps of any one of claim 1 to 17 when said product is run on the computer.

19. An electronic system (100) comprising a processor (101) and a memory (103, 104, 105) configured for performing the steps of any one of claim 1 to 17.
